# FASCICULE DE BREVET EUROPEEN

(11) **EP 3 760 556 B1**
(45) Date de publication et mention de la délivrance du brevet: **09.12.2026**
(21) Numéro de dépôt: 20183165.8
(22) Date de dépôt: 30.06.2020
(51) Int. Cl.: B65G 29/00, A22C 11/00, B65B 19/34, B65G 47/08, B65G 47/32, B65G 47/53, B65G 47/71, B65G 47/82, B65G 47/84, B65B 35/26

(54) **DISPOSITIF DE CONVOYAGE DE PRODUITS FILIFORMES A GRANDE VITESSE ET PROCEDE DE MISE EN OEUVRE**
SCHNELLFÖRDERVORRICHTUNG FÜR FADENFÖRMIGE PRODUKTE, UND UMSETZUNGSVERFAHREN
DEVICE FOR TRANSPORTING ELONGATED PRODUCTS AT HIGH SPEED AND METHOD FOR IMPLEMENTING SAME

(30) Priorité: 01.07.2019 FR 1907286
(43) Date de publication de la demande: 06.01.2021
(73) Titulaire: Semso, 40300 Hastingues (FR)
(72) Inventeur: REDON, Marc, 64600 ANGLET (FR); LEMAIRE, Yves, 64600 ANGLET (FR)
(74) Mandataire: Aquinov

(56) Documents cités:
- EP-A1- 2 623 421
- WO-A1-2010/130257
- WO-A1-2012/144890
- CN-U- 208 233 459
- DE-A1- 19 610 965
- FR-A1- 3 057 861
- JP-A- 2018 052 716
- US-A- 3 363 741
- US-A- 5 052 542

## Description

L'invention concerne un dispositif de convoyage de produits filiformes à grande vitesse, en l'occurrence des produits alimentaires tels que des saucisses. L'invention couvre aussi le procédé de mise en œuvre du dispositif.

Le document US 5 052 542 A divulgue les caractéristiques techniques du préambule de la revendication 1.
L'industrie alimentaire doit fabriquer des produits alimentaires de qualité sanitaire irréprochable, avec des bonnes propriétés organoleptiques mais ceci avec des vitesses de production très élevées. Ces vitesses de production sont le gage d'une productivité suffisante pour rendre la fabrication rentable. Les convoyages dans les lignes de fabrication sont des verrous à l'augmentation des cadences, ceci étant d'autant plus vrai que les convoyages nécessitent des changements de direction, des opérations intermédiaires comme des espacements des produits fabriqués par exemple, opérations intermédiaires qui doivent conserver les cadences. Dans le cas de produits alimentaires, notamment des produits filiformes, encore plus particulièrement des saucisses, les produits présentent une tenue mécanique limitée du fait de la forme. Une des dimensions est en effet petite en regard des autres, en l'occurrence le diamètre par rapport à la longueur. Ces propriétés mécaniques dont d'autant plus limitées que ces produits sont crus, ne sont même pas séchés, ce qui pourrait leur conférer une cohésion meilleure donc des propriétés mécaniques plus élevées. Les produits frais et/ou crus sont d'une manutention très délicate, ceci d'autant plus que les cadences sont élevées, car les accélérations sont importantes mais les décélérations également. La prise du produit comme les transferts doivent être maîtrisés en tenant compte de ces contraintes. Les cadences de travail, mentionnées comme étant très élevées, sont des valeurs de 10 à 20 produits à manipuler par seconde pour donner un ordre d'idée. Ces manipulations sont réalisées, en certains points de la chaîne de fabrication, pour chaque produit indépendamment, et non pas par lots. Durant la fabrication, les produits doivent être positionnés de façon parfaitement adaptée, doivent souvent subir une étape de conformage pour qu'au final tous les produits, pris individuellement, soient identiques, et que leurs positionnements soient préparés pour l'étape suivante, notamment la cuisson, le séchage, l'affinage, voire l'emballage desdits produits. Très clairement, aux hautes cadences mentionnées, si un produit est mal positionné, il peut entraîner une perturbation de la fabrication de l'ensemble de la chaîne en un espace-de temps très restreint de quelques secondes. Une telle perturbation est au mieux arrêtée automatiquement, voire manuellement, mais elle est à proscrire car non seulement, il y a une perte de matière, mais surtout un tel incident perturbe la production, ce qui coûte beaucoup plus cher, nécessite un nettoyage des souillures du matériel hors du cheminement, une remise en service de la chaîne de production, nécessite aussi bien souvent le retrait des premiers produits fabriqués qui ont séjourné à l'air libre trop longtemps, etc. Malgré les cadences très élevées, le dispositif doit impérativement être d'une très grande fiabilité et doit éviter tout incident.

L'invention propose un dispositif de convoyage selon la revendication 1. Le dispositif de convoyage selon la présente invention propose un agencement qui assure le transfert de produits d'un premier convoyeur sur un second convoyeur, les premier et second convoyeurs étant orientés à 90°. Ce dispositif de convoyage concerne notamment des produits filiformes, manipulés à très haute cadence, qui est adapté pour assurer d'autres fonctions complémentaires. C'est ainsi que ce dispositif assure la coupe en amont et assure l'espacement des produits les uns des autres en aval, d'un pas défini. Le dispositif permet en outre de réséquer les produits filiformes ainsi transférés et/ou de les conformer à la dimension exacte du produit à fabriquer et au profil recherché, notamment aux extrémités.

Le dispositif selon la présente invention vise à répondre aux contraintes techniques imposées, avec des solutions suffisamment simples pour une réalisation dans des plages économiques adaptées. Ce dispositif de convoyage de produits P, filiformes, à grande vitesse, selon la présente invention en l'occurrence des produits alimentaires tels que des saucisses, comprend un premier convoyeur de produits P, avec un tapis et un second convoyeur de ces mêmes produits P, avec un tapis , ainsi qu'une tête de transfert, interposée entre les premier et second convoyeurs, lesdits premier et second convoyeurs étant perpendiculaires.

La tête de transfert comprend une roue de transfert, montée sur un arbre d'entraînement, dont la direction est orientée parallèlement à la direction de translation du premier convoyeur, ladite roue de transfert comportant n logements, orientés parallèlement à l'axe d'entraînement, chaque logement n, ayant une section adaptée à la section partielle du produit P brut, en l'occurrence hémisphérique. La longueur de chaque logement n, est sensiblement égale à la longueur d'un produit P brut, isolé. De plus, chaque logement n, est ouvert à au moins une extrémité, en l'occurrence dans le mode de réalisation, aux deux extrémités.

Selon une autre caractéristique, l'arbre d'entraînement de la roue de transfert est lié mécaniquement à une motorisation M, équipée d'un réducteur et/ou d'un renvoi à poulies et courroies ou chaînes afin de générer le ratio d'entraînement adéquat. Le dispositif de convoyage selon l'invention comprend aussi une unité de conformage avec un châssis, mobile en translation par rapport au bâti, supportant le second convoyeur, des premiers moyens de manœuvre en translation, assurant un déplacement dudit châssis sur une longueur L, en aller-retour. Les moyens de conformage comprennent aussi deux pièces latérales de conformage droite et gauche, munies de moyens de manœuvre suivant l'axe transversal du second convoyeur, c'est-à-dire parallèlement à l'axe longitudinal de chaque produit P.

L'invention vise aussi le procédé de mise en œuvre du dispositif.

La présente invention est maintenant décrite à l'aide d'exemples uniquement illustratifs et nullement limitatifs de la portée de l'invention, ceci à partir des dessins annexés, sur lesquels :

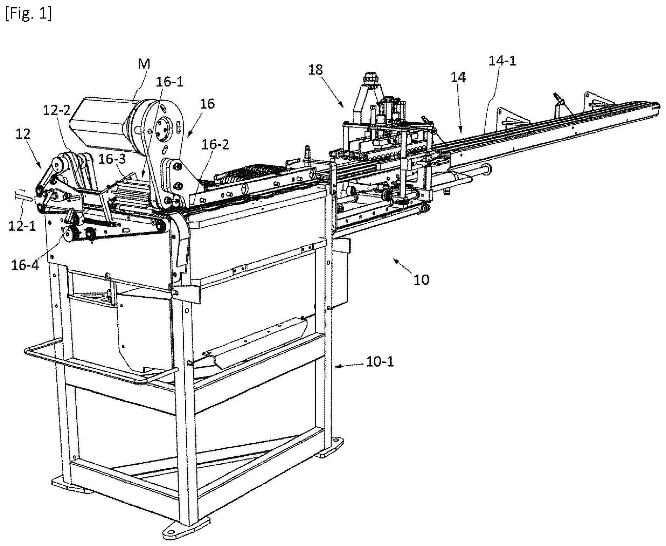

[Fig. 1] représente une vue en perspective du dispositif de convoyage selon la présente invention, de l'amont vers l'aval.

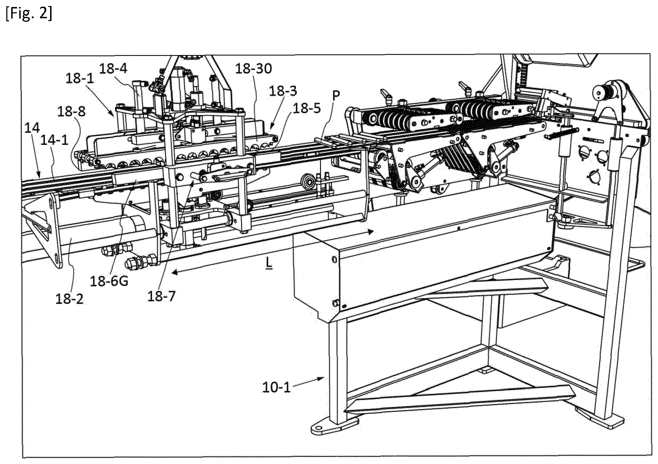

[Fig. 2] représente une vue en perspective de l'aval vers l'amont du dispositif de convoyage selon l'invention.
Le dispositif de convoyage 10 de la présente invention est maintenant décrit en se rapportant aux différentes figures indifféremment. La description qui va suivre, vise le transfert de produits filiformes P, dans le mode de réalisation exemplifiant retenu, des produits filiformes du type saucisses crues prévues pour être séchées. Ce dispositif 10 comprend un premier convoyeur 12 de produits P, et un second convoyeur 14 de ces mêmes produits P. Entre les premier 12 et second 14 convoyeurs, une tête de transfert 16 est interposée et une unité de conformage 18 est interposée sur le second convoyeur 14.

Le dispositif de convoyage 10 comprend un bâti 10-1, destiné à supporter l'ensemble des premier 12 et second 14 convoyeurs ainsi que la tête de transfert 16. Ce bâti 10-1 est interposé sur une chaîne de fabrication complète de produits P, de type connu, avec, en amont, une unité de production des produits P et en aval au moins une unité de traitements complémentaires et/ou de packaging de ces produits P, non représentée. Ce bâti 10-1 est, de façon connue, à hauteur de travail pour les opérateurs et au-dessus du sol, pour des raisons d'ergonomie et d'accessibilité et pour des raisons d'hygiène.

Le premier convoyeur 12 est disposé en sortie de production des produits P, bruts, en l'occurrence des saucisses, qui sont sortis d'une filière d'une extrudeuse de l'unité de production, non représentée et de type parfaitement connu. Les produits P, bruts, se présentent initialement sous la forme d'un cordon 12-1, continu, monolithique, d'un diamètre donné, contenant la matière interne P1 constituant ledit produit avec, en périphérie, une couche d'une poudre alimentaire, destinée à former une enveloppe P2, ceci de façon connue. Le cordon 12-1 se présente donc sous cette forme sur le premier convoyeur 12. La nature du tapis 12-2 est compatible avec celle de l'enveloppe P2, ceci pour éviter toute adhérence, toute accumulation de matière sur le tapis etc. Le tapis 12-2 du convoyeur est d'une largeur étroite car l'axe de translation dudit tapis 12-2 est parallèle à l'axe longitudinal du cordon 12-1. De plus, le tapis 12-2 du premier convoyeur 12 se prolonge sous la tête de transfert 16.

Le second convoyeur 14 comprend un tapis 14-1 dont l'axe de translation est orienté perpendiculairement au tapis 12-2 du premier convoyeur 12. Le début du second convoyeur 14 vient à proximité immédiate du bord latéral du premier convoyeur, sous la tête de transfert 16. La largeur de ce second convoyeur 14, destiné à recevoir les produits P, perpendiculairement, est supérieure à la longueur de chaque produit P brut, individuel, comme il sera expliqué plus avant. La nature du matériau du tapis 14-1 du second convoyeur est avantageusement identique à celle du tapis 12-2 du premier convoyeur 12. Ce second convoyeur 14 se prolonge vers des unités de traitements et/ou de packaging, non représentées. Ce second convoyeur 14 comporte, interposée sur sa longueur, l'unité de conformage 18.

La tête de transfert 16 est interposée entre les premier 12 et second 14 convoyeurs. Cette tête de transfert 16 comprend une roue de transfert 16-1, montée sur un arbre d'entraînement 16-2, dont la direction est orientée parallèlement à la direction de translation du premier convoyeur 12. Cette roue de transfert 16-1 comporte n logements 16-3, orientés parallèlement à l'arbre d'entraînement, suivant des génératrices. Chaque logement 16-3 présente une section adaptée à la forme du produit P brut, c'est-à-dire en l'occurrence, une section sensiblement en demi-cercle, le rayon de ce demi-cercle correspondant, aux jeux près de fonctionnement, au moins au rayon d'un produit P brut, individuel, mais peut être d'un diamètre plus élevé en fonction des besoins et des cadences prévues. La longueur de chaque logement 16-3 est sensiblement égale à la longueur d'un produit P brut isolé. La longueur de la roue de transfert 16-1 est donc sensiblement égale à la longueur d'un produit P brut, isolé, et chaque logement 16-3 est ouvert à ses deux extrémités et sur toute sa longueur puisqu'il est hémisphérique. La roue de transfert 16-1 est ainsi du type roue à aubes. L'arbre d'entraînement 16-2 de la roue de transfert 16-1 est lié mécaniquement à une motorisation M, éventuellement équipée d'un réducteur et/ou d'un renvoi à poulies et courroies ou chaînes afin de générer le ratio d'entraînement adéquat. Le sens de rotation de l'arbre d'entraînement 16-2 est celui qui va du premier convoyeur 12 vers le second convoyeur 14, en passant par dessous ledit arbre d'entraînement, de façon à déplacer chaque logement 16-5 par la distance la plus courte du tapis 12-2 du premier convoyeur 12 au tapis 14-1 du second convoyeur 14. En amont de la roue de transfert 16-1, il est prévu un massicot 16-4 dont la lame de coupe est orientée perpendiculairement à la direction de déplacement du premier convoyeur de façon à pouvoir assurant une coupe du cordon 12-1, initialement continu, monolithique, déposé et convoyé par le premier convoyeur 12. La longueur de coupe est adaptée pour générer des produits P, bruts, isolés. Le massicot peut prendre toute forme y compris un multi lames. Les produits P, bruts, isolés sont donc alignés et juxtaposés, mais séparés les uns des autres par une espace aussi minime que possible de façon à limiter autant que possible le temps d'acheminement de chaque produits P, bruts, isolés x + 1 après le produit x. le massicot peut ainsi être prévu bien en amont ou immédiatement avant la tête de transfert. Des moyens de détection, de type connu comme des cellules optoélectroniques, sont disposés en amont de la roue de transfert 16-1, de façon à pouvoir détecter ledit espace généré par le massicot entre deux produits P, bruts, isolés.

L'unité de conformage 18 comprend un châssis 18-1, mobile en translation par rapport au bâti supportant le second convoyeur 14. Ce châssis 18-1 mobile en translation comprend des premiers moyens de manœuvre 18-2 en translation, assurant un déplacement dudit châssis 18-1 sur une longueur L, en aller-retour, suivant la direction de translation du second convoyeur de façon à permettre au châssis de suivre ledit convoyeur dans le sens de déplacement ou au contraire de ramener ledit châssis à contresens, au point initial. Le châssis 18-1 comprend des moyens de conformage 18-3. Ces moyens de conformage 18-3, selon le mode de réalisation retenu, comprennent un plateau de positionnement 18-30 en partie supérieure, mobile selon une direction verticale, en monte et baisse, muni de deuxièmes moyens de manœuvre 18-4 et comportant des logements 18-5, aptes à venir couvrir chacun un produit filiforme P, en l'occurrence une saucisse. La longueur de chaque logement est inférieure à la longueur d'un produit P brut. Ces moyens de conformage 18-3 sont complétés par deux pièces latérales de conformage droite et gauche 18-6D et 18-6G, munies de moyens de manœuvre 18-7 suivant l'axe transversal du second convoyeur, c'est-à-dire parallèlement à l'axe longitudinal de chaque produit P. les moyens de manœuvre sont du type actionneurs à air sous pression. Ces pièces latérales de conformage droite et gauche 18-6D et 18-6G, sont munies de logements 18-8 de forme adaptée et complémentaire de celles des logements 18-5. Cette forme adaptée correspond à un bout de saucisse, arrondi en hémisphère, dans le cas de ce type de produit.

Le fonctionnement du dispositif de convoyage selon la présente invention est maintenant décrit. Le cordon 12-1 de produit P, brut, continu, convoyé par le tapis 12-2 du premier convoyeur ayant été massicoté en amont a libéré un espace détectable par les moyens de détection en amont de la roue de transfert. Lorsqu'un premier espace est détecté, la rotation de la roue de transfert 16-1 est interrompue. Le produit P, brut, isolé, x, vient se loger par translation, porté par le premier convoyeur translation, sous un logement 16-3, n de la roue de transfert 16-1, positionnée de façon adaptée, c'est-à-dire avec ce logement desdits logements 16-3 en point bas. Le produit reste sur le premier convoyeur, sans être saisi par la roue de transfert. Le produit P brut, x, continue sa translation, sur une très courte longueur et arrive en position sensiblement centrée sous la roue, dans le volume constitué du logement 16-3, n, au-dessus et du tapis du premier convoyeur en dessous. Dès que le produit P arrive en position centrée, le produit x+1 est attente sur le premier convoyeur. Les moyens de détection détectent alors le second espace qui sépare le produit P, brut, isolé, x du produit P brut, isolé x + 1. Dès lors ladite roue de transfert démarre en rotation, entraînée par le moteur M, sur un arc égal à 360° divisés par le nombre n de logements. Cette rotation entraîne la poussée, le balayage, du produit P, x, brut, du tapis 12-1 du premier convoyeur vers le tapis 14-1 du second convoyeur 14, par roulage et translation combinés, plus simplement, par balayage. Simultanément, dès l'amorce de la rotation, le produit P, brut, isolé, x + 1, est déplacé en translation par le tapis 12-1 du premier convoyeur dans le logement 16-3 suivant n + 1 de la roue de transfert. Ainsi de suite, les produits P isolés, x à x + n sont positionnés sur le tapis 14-1 du second convoyeur à une cadence très rapide, de l'ordre de 10 à 20 produits P, bruts, isolés, par seconde. On note que la roue de transfert 16-1 a permis la mise en position parallèle des produits P et simultanément, a généré un écart entre deux produits P, bruts, isolés, consécutifs sur ledit tapis 14-1 du second convoyeur, ce qui évite toute adhérence par points des produits entre eux. Pour régler l'écart entre deux produits x et x + 1 consécutifs, il suffit que la vitesse du second convoyeur soit adaptée par rapport à la vitesse du premier convoyeur et à la cadence de la roue de transfert. La synchronisation doit être réglée entre le premier convoyeur 12 et la tête de transfert 16 mais la vitesse du second convoyeur 14 peut être adaptée pour disposer d'un écart donné séparant deux produits consécutifs. Plus la vitesse du second convoyeur sera supérieure à la cadence de balayage de la tête de transfert et plus l'écart sera important. La roue de transfert 16-1 travaille comme une roue à aubes mais avec des micro arrêts de la rotation.

Les produits P, isolés, bruts sont convoyés par le second convoyeur pour venir au droit de l'unité de conformage 18. Cette unité assure la mise en forme du produit P fini. A cet effet, lorsque le nombre de produits P, bruts, est identique au nombre de logements 18-5 du plateau de positionnement 18-30, ledit plateau est abaissé par les deuxièmes moyens de manœuvre 18-4 pour venir couvrir le lot de produits P, bruts, correspondant. En cas de léger désalignement, les produits sont réalignés. Le châssis 18-1, mobile en translation, est déplacé par les premiers moyens de manœuvre 18-2 en translation, assurant un déplacement dudit châssis 18-1 sur une longueur L, à la même vitesse que le second convoyeur 14. Le plateau de positionnement 18-30 est ainsi à iso vitesse avec les produits P, bruts disposés sur le second convoyeur 14. Les deux pièces latérales de conformage droite et gauche 18-6D et 18-6G, elles aussi embarquées sur le châssis 18-1, sont déplacées pour être plaquées contre le plateau de positionnement, grâce aux moyens de manœuvre 18-7, suivant l'axe transversal du second convoyeur, c'est-à-dire parallèlement à l'axe longitudinal de chaque produit P brut. Les extrémités des produits P, bruts, sont mises en forme, arrondies, grâce à la forme des logements 18-8 des pièces latérales de conformage, la longueur est calibrée et on obtient alors des produits P, finis, strictement identiques. Une fois ces opérations effectuées, les deux pièces latérales de conformage droite et gauche 18-6D et 18-6G sont rappelées en position initiale, le plateau de positionnement 18-30 également. Le chariot 18-1 est alors libre pour être ramené à contresens en position initiale amont. Les produits P finis poursuivent leur translation sur le second convoyeur, sans mouvement relatif desdits produits P par rapport au second convoyeur qui les porte. La vitesse de translation du second convoyeur 14, la vitesse de retour du chariot 18-1, les vitesses de remontée du plateau de positionnement 18-30 et des pièces latérales de conformage ainsi que le nombre de logements 18-5 dudit plateau, sont adaptés pour que le temps de déplacement à contresens et la remise en place des organes associés, correspondent au temps de déplacement en translation sur le tapis du second convoyeur 14 d'un nombre de produits P, brut, égal audit nombre de logements 18-5. Cette opération de conformage est alors rééditée.

L'ensemble du dispositif de convoyage comprend un automate de pilotage, non représenté, qui met en œuvre le procédé de transfert utilisant le dispositif selon la présente invention. Ce procédé consiste à générer les étapes suivantes :
- déplacer un produit P, brut, filiforme, continu, suivant une première direction,
- massicoter le produit P, brut, filiforme, continu pour générer des produits P, bruts, isolés
- déplacer les produits P, bruts, isolés, suivant une seconde direction, perpendiculaire à la première direction, en générant un espacement entre les produits,
- conformer par lots, à la volée, les produits P, bruts, isolés pour obtenir des produits P, finis.

L'automate de pilotage assure les mises en service des différents moteurs des convoyeurs, de la roue de transfert, des moyens de conformation après capture des signaux des moyens de détection.

Le procédé consiste lors de l'étape de conformage, simultanément à parfaire le caractère rectiligne de chaque produit P, brut du lot, à mettre à la longueur et à traiter les extrémités desdits produits P, filiformes, rectilignes, pour l'obtention de produits finis.

Les dispositif et procédé selon la présente invention permettent de traiter des cadences très importantes et de délivrer, en bout de chaîne, des produits parfaitement calibrés, parallèles, espacés les uns des autres, alignés, avec des corps parfaitement cylindriques et des extrémités parfaitement arrondies, ceci dans le cas retenu d'une application à la fabrication de saucisses, en particulier pour la production de saucisses sèches. La vitesse aussi élevée de 10 à 20 produits par seconde, pour donner un ordre d'idée, est ainsi atteinte notamment grâce au déplacement par balayage d'un convoyeur à l'autre sans aucune saisie ou placement des produits P dans des alvéoles fermés longitudinalement puisqu'il s'agit de logements hémisphériques ouverts longitudinalement. Un roue à palettes aurait exactement les mêmes effets de transfert mais la forme hémisphérique proche de celle du produit P, assure un transfert de meilleure qualité et un meilleur accompagnement des produits P.

## Revendications

1. Dispositif de convoyage (10), à grande vitesse de produits (P), filiformes et monolithiques, formant un cordon (12-1) continu, en l'occurrence des produits alimentaires tels que des saucisses, comportant un premier convoyeur (12) de produits, bruts, isolés, avec un tapis (12-1) et un second convoyeur (14) de ces mêmes produits, avec un tapis (14-1), ainsi qu'une tête de transfert (16), interposée entre les premier (12) et second (14) convoyeurs, lesdits premier et second convoyeurs étant perpendiculaires, la tête de transfert (16) comprenant une roue de transfert (16-1) comportant n logements (16-3) ouverts longitudinalement et assure un transfert par balayage du tapis (12-1) du premier convoyeur (12) vers le tapis (14-1) du second convoyeur (14), la roue de transfert (16-1) étant montée sur un arbre d'entraînement (16-2), dont la direction est orientée parallèlement à la direction de translation du premier convoyeur (12), lesdits n logements (16-3), étant orientés parallèlement à l'axe d'entraînement, **caractérisé en ce que** chaque logement (16-3) ayant une section adaptée à la section partielle du produit-P brut et une longueur sensiblement égale à la longueur d'un produit brut, isolé.

2. Dispositif de convoyage (10) de produits filiformes à grande vitesse selon la revendication précédente, **caractérisé en ce que** chaque logement (16-3), est ouvert à ses deux extrémités.

3. Dispositif de convoyage (10) de produits filiformes à grande vitesse, selon l'une des revendications précédentes, **caractérisé en ce que** l'arbre d'entraînement (16-2) de la roue de transfert (16-1) est lié mécaniquement à une motorisation (M), équipée d'un réducteur et/ou d'un renvoi à poulies et courroies ou chaînes afin de générer le ratio d'entraînement adéquat.

4. Dispositif de convoyage (10) de produits filiformes à grande vitesse selon l'une quelconque des revendications précédentes, **caractérisé en ce qu'**il comprend une unité de conformage (18) des produits (P) bruts, isolés, interposée sur le second convoyeur (14).

5. Dispositif de convoyage (10) de produits filiformes à grande vitesse selon la revendication précédente, **caractérisé en ce que** l'unité de conformage (18) comprend un châssis (18-1), mobile en translation par rapport au bâti (10), supportant le second convoyeur (14), des premiers moyens de manœuvre (18-2) en translation, assurant un déplacement dudit châssis (18-1) sur une longeur (L), en aller-retour.

6. Dispositif de convoyage (10) de produits filiformes à grande vitesse selon la revendication précédente, **caractérisé en ce que** le châssis (18-1) comprend des moyens de conformage (18-3) des produits (P), bruts, isolés.

7. Dispositif de convoyage (10) de produits filiformes à grande vitesse selon la revendication précédente, **caractérisé en ce que** les moyens de conformage (18-3) comprennent un plateau de positionnement (18-30) en partie supérieure, mobile selon une direction verticale, en monte et baisse, muni de deuxièmes moyens de manœuvre (18-4) et comportant des logements (18-5), aptes à venir couvrir, chacun, un produit (P), et la longueur de chacun desdits logements est inférieure à la longueur d'un produit brut.

8. Dispositif de convoyage (10) de produits filiformes à grande vitesse selon l'une des revendications 6 ou 7, **caractérisé en ce que** les moyens de conformage (18-3) comprennent deux pièces latérales de conformage droite et gauche (18-6D,18-6G), munies de moyens de manœuvre (18-7) suivant l'axe transversal du second convoyeur (14), c'est-à-dire parallèlement à l'axe longitudinal de chaque produit (P).

9. Dispositif de convoyage (10) de produits filiformes à grande vitesse selon la revendication précédente, **caractérisé en ce que** deux pièces latérales de conformage droite et gauche (18-6D, 18-6G) sont munies de logements (18-8) pour former les extrémités de chaque produit (P), brut.

10. Procédé de mise en œuvre du dispositif selon l'une quelconque des revendications précédentes, **caractérisé en ce qu'**il comprend les étapes suivantes :
- déplacer un produit (P), brut, filiforme, monolithique en un cordon continu, suivant une première direction,
- massicoter le produit, brut, filiforme, monolithique en un cordon continu pour générer des produits , bruts, isolés
- déplacer les produits , bruts, isolés, suivant une seconde direction, par balayage, perpendiculairement à la première direction, en générant un espacement entre les produits,
- conformer par lots, à la volée les produits , bruts, isolés pour obtenir des produits finis.

## Patentansprüche

1. Fördervorrichtung (10) mit hoher Geschwindigkeit für fadenförmige und monolithische Produkte (P), die einen kontinuierlichen Strang (12-1) ausbilden, in diesem Fall Lebensmittelprodukte wie Würstchen, mit einem ersten Förderer (12) für rohe, abgesonderte Produkte mit einem Band (12-1) und einem zweiten Förderer (14) für diese selben Produkte mit einem Band (14-1), sowie einem Transferkopf (16), der zwischen dem ersten (12) und dem zweiten (14) Förderer gelegen ist, wobei der erste und der zweite Förderer senkrecht zueinander sind, wobei der Transferkopf (16) ein Transferrad (16-1) mit n in Längsrichtung offenen Aufnahmen (16-3) umfasst, und einen Transfer durch Abtastung des Bands (12-1) des ersten Förderers (12) zu dem Band (14-1) des zweiten Förderers (14) sicherstellt, wobei das Transferrad (16-1) auf einer Antriebswelle (16-2) montiert ist, dessen Richtung parallel zu der Verschiebungsrichtung des ersten Förderers (12) ausgerichtet ist, wobei die n Aufnahmen (16-3) parallel zu der Antriebsachse ausgerichtet sind, **dadurch gekennzeichnet, dass** jede Aufnahme (16-3) einen Querschnitt, der an den Teilquerschnitt des rohen Produkts angepasst ist, und einer Länge aufweist, die im Wesentlichen gleich der Länge eines abgesonderten rohen Produkts ist.

2. Fördervorrichtung (10) für fadenförmige Produkte mit hoher Geschwindigkeit nach dem vorstehenden Anspruch,
**dadurch gekennzeichnet, dass** jede Aufnahme (16-3) an ihren beiden Enden offen ist.

3. Fördervorrichtung (10) für fadenförmige Produkte mit hoher Geschwindigkeit nach einem der vorstehenden Ansprüche,
**dadurch gekennzeichnet, dass** die Antriebswelle (16-2) des Transferrads (16-1) mit einem Motorantrieb (M) mechanisch verbunden ist, der mit einem Getriebe und/oder einem Riemenscheiben- und Riemen- oder Kettengetriebe ausgestattet ist, um das geeignete Antriebsverhältnis zu erzeugen.

4. Fördervorrichtung (10) für fadenförmige Produkte mit hoher Geschwindigkeit nach einem der vorstehenden Ansprüche, **dadurch gekennzeichnet, dass** sie eine Formgebungseinheit (18) für die rohen, abgesonderten Produkte (P) umfasst, die auf dem zweiten Förderer (14) gelegen ist.

5. Fördervorrichtung (10) für fadenförmige Produkte mit hoher Geschwindigkeit nach dem vorstehenden Anspruch,
**dadurch gekennzeichnet, dass** die Formungseinheit (18) einen Rahmen (18-1), der gegenüber dem Gestell (10) translatorisch bewegbar ist und den zweiten Förderer (14) trägt, sowie erste translatorische Betätigungsmittel (18-2), die eine Hin- und Herbewegung des Gestells (18-1) über eine Länge (L) gewährleisten, umfasst.

6. Fördervorrichtung (10) für fadenförmige Produkte mit hoher Geschwindigkeit nach dem vorstehenden Anspruch,
**dadurch gekennzeichnet, dass** das Gestell (18-1) Formgebungsmittel (18-3) für die rohen, abgesonderten Produkte (P) umfasst.

7. Fördervorrichtung (10) für fadenförmige Produkte mit hoher Geschwindigkeit nach dem vorstehenden Anspruch,
**dadurch gekennzeichnet, dass** die Formgebungsmittel (18-3) eine Positionierungsplatte (18-30) im oberen Teil umfassen, die in einer vertikalen Richtung auf und ab beweglich ist, die mit zweiten Betätigungsmitteln (18-4) versehen ist und Aufnahmen (18-5) aufweist, die geeignet sind, jeweils ein Produkt (P) abzudecken, und die Länge jeder der Aufnahmen kleiner als die Länge eines rohen Produkts ist.

8. Fördervorrichtung (10) für fadenförmige Produkte mit hoher Geschwindigkeit nach einem der Ansprüche 6 oder 7,
**dadurch gekennzeichnet, dass** die Formgebungsmittel (18-3) zwei rechte und linke seitliche Formgebungsteile (18-6D, 18-6G), die mit Betätigungsmitteln (18-7) entlang der Querachse des zweiten Förderers (14), das heißt parallel zu der Längsachse jedes Produkts (P), versehen sind, umfassen.

9. Fördervorrichtung (10) für fadenförmige Produkte mit hoher Geschwindigkeit nach dem vorstehenden Anspruch,
**dadurch gekennzeichnet, dass** zwei rechte und linke seitliche Formstücke (18-6D, 18-6G) mit Aufnahmen (18-8) versehen sind, um die Enden jedes rohen Produkts (P) auszubilden.

10. Verfahren zum operativen Umsetzen der Vorrichtung nach einem der vorstehenden Ansprüche, **dadurch gekennzeichnet, dass** es die folgenden Schritte umfasst:
- Bewegen eines rohen, fadenförmigen, monolithischen Produkts (P) in einem kontinuierlichen Strang entlang einer ersten Richtung,
- Zuschneiden des rohen, fadenförmigen, monolithischen Produkts in einem kontinuierlichen Strang, um rohe, abgesonderte Produkte zu erzeugen
- Bewegen der rohen, abgesonderten Produkte entlang einer zweiten Richtung durch Abtastung, senkrecht zu der ersten Richtung, unter Erzeugung eines Abstands zwischen den Produkten,
- chargenweises, fliegendes Formen der rohen, abgesonderten Produkte zum Erhalten von Endprodukten.

## Claims

1. Device (10) for conveying monolithic string-shaped products (P) forming a continuous rope (12-1), in this case food products such as sausages, at high speed, having a first conveyor (12) for separated raw products, with a belt (12-1), and a second conveyor (14) for the same products, with a belt (14-1), and a transfer head (16), interposed between the first (12) and the second (14) conveyor, said first and said second conveyor being perpendicular, the transfer head (16) comprising a transfer wheel (16-1) having n longitudinally open receptacles (16-3) and providing sweeping transfer from the belt (12-1) of the first conveyor (12) to the belt (14-1) of the second conveyor (14), the transfer wheel (16-1) being mounted on a drive shaft (16-2), the direction of which is oriented parallel to the translation direction of the first conveyor (12), said n receptacles (16-3) being oriented parallel to the drive axis, **characterized in that** each receptacle (16-3) has a cross section adapted to the partial section of the raw product and a length substantially equal to the length of a separated raw product.

2. Device (10) for conveying string-shaped products at high speed according to the preceding claim, **characterized in that** each receptacle (16-3) is open at both of its ends.

3. Device (10) for conveying string-shaped products at high speed according to either of the preceding claims, **characterized in that** the drive shaft (16-2) of the transfer wheel (16-1) is mechanically connected to a motor (M) which is equipped with a reduction gear and/or a pulley and belt or chain drive gear in order to generate the appropriate drive ratio.

4. Device (10) for conveying string-shaped products at high speed according to any one of the preceding claims, **characterized in that** it comprises a unit (18) for shaping the separated raw products (P) which is interposed on the second conveyor (14).

5. Device (10) for conveying string-shaped products at high speed according to the preceding claim, **characterized in that** the shaping unit (18) comprises a framework (18-1), which is movable in translation relative to the frame (10) and supports the second conveyor (14), and first translational maneuvering means (18-2), which move said framework (18-1) back and forth over a length (L).

6. Device (10) for conveying string-shaped products at high speed according to the preceding claim, **characterized in that** the framework (18-1) comprises means (18-3) for shaping the separated raw products (P).

7. Device (10) for conveying string-shaped products at high speed according to the preceding claim, **characterized in that** the shaping means (18-3) comprise a positioning plate (18-30) at the top portion, which is movable up and down in a vertical direction, is equipped with second maneuvering means (18-4), and has receptacles (18-5), each of which is capable of covering a product (P), and the length of each of said receptacles is less than the length of a raw product.

8. Device (10) for conveying string-shaped products at high speed according to either of claims 6 or 7, **characterized in that** the shaping means (18-3) comprise two lateral shaping parts (18-6D,18-6G), a right-hand one and a left-hand one, equipped with means (18-7) for maneuvering along the transverse axis of the second conveyor (14), that is, parallel to the longitudinal axis of each product (P).

9. Device (10) for conveying string-shaped products at high speed according to the preceding claim, **characterized in that** two lateral shaping parts (18-6D, 18-6G), a right-hand one and a left-hand one, are equipped with receptacles (18-8) for forming the ends of each raw product (P).

10. Method for implementing the device according to any one of the preceding claims, **characterized in that** it comprises the following steps:
- moving a monolithic string-shaped raw product (P) in a continuous rope in a first direction,
- slicing the monolithic string-shaped raw product in a continuous rope to produce separated raw products,
- moving the separated raw products in a second direction by sweeping, perpendicularly with respect to the first direction, creating spacing between the products,
- shaping the separated raw products in batches on the go to obtain finished products.
